# EUROPEAN PATENT SPECIFICATION

(11) **EP 2 077 038 B1**
(45) Date of publication and mention of the grant of the patent: **30.01.2013**
(21) Application number: 07844389.2
(22) Date of filing: 18.10.2007
(51) Int. Cl.: H04N 7/26, H04N 7/36, H04N 7/46

(54) **SCALABLE VIDEO CODING WITH FILTERING OF LOWER LAYERS**
SKALIERBARE VIDEOKODIERUNG MIT FILTERUNG UNTERER SCHICHTEN
CODAGE VIDÉO ÉVOLUTIF AVEC FILTRAGE DE COUCHES INFÉRIEURES

(30) Priority: 18.10.2006 US 852939 P
(43) Date of publication of application: 08.07.2009
(73) Proprietor: APPLE INC., Cupertino, CA 95014 (US)
(72) Inventor: WU, Hsi-jung, San Jos, California 95129 (US); SHI, Xiaojin, Santa Cruz, California 95060 (US); HASKELL, Barin Geoffrey, Mountain View, CA 94040 (US)
(74) Representative: Rooney, John-Paul
(86) International application number: PCT/US2007/081758
(87) International publication number: WO 2008/049052

(56) References cited:
- US-A- 6 148 026
- US-A1- 2006 012 719
- US-A1- 2006 165 302
- OHM J-R: "Advances in Scalable Video Coding" PROCEEDINGS OF THE IEEE, IEEE. NEW YORK, US, vol. 93, no. 1, January 2005 (2005-01), pages 42-56, XP011123852 ISSN: 0018-9219

## Description

### BACKGROUND

The present invention relates to video decoders and, more specifically, to an improved multi-layer video decoder.

Video coding refers generally to coding motion picture information to transmission over a bandwidth limited channel. Various video coding techniques are known. The most common techniques, such as those are standardized in the ITU H-series and MPEG-series coding specifications, employ motion compensation prediction to reduce channel bandwidth. Motion compensated video coders exploit temporal redundancy between frames of a video sequence by predicting video content of a new frame currently being decoded with reference to video content of other frames that were previously decoded. At a decoder, having received and decoded a first number of frames, the video decoder is able to use decoded video content of the previously decoded frames to generate content of other frames.

Layered video coding systems structure video coding/decoding operations and coded video data for a wide variety of applications. Coded video data may include a first set of video data, called "base layer" data herein, from which the source video data can be recovered at a first level of image quality. The coded video data may include other sets of video data, called "enhancement layer" data herein, from which when decoded in conjunction with the base layer data the source video data can be recovered at a higher level of image quality that can be achieved when decoding the base layer data alone.

Layered video coding system find application in a host of coding environments. For example, layered coding systems can be advantageous when coding video data for a variety of different video decoders, some of which may have relatively modest processing resources but others that have far greater processing resources. A simple decoder may recover a basic representation of the source video by decoding and displaying only the base layer data. A more robust decoder, however, may recover better image quality by decoding not only the base layer data but also data from one or more enhancement layers. In other applications, a layered coding scheme may be advantageous in transmission environments where channel bandwidth cannot be determined in advance. If limited channel bandwidth is available, a transmitter of coded data may send only the base layer data through the channel, which permits a video decoder to display at least a basic representation of the source video. A transmitter may send multiple layers of coded data through a larger channel, which will yield better image quality. US 2006/012719 describes a system and method for motion prediction in scaleable video coding, by obtaining current layer motion vectors; determining a final base layer motion vector; and calculating a predictive motion vector based on the current layer motion vectors and the final base layer motion vector. A similarity or consistency of neighbouring motion vectors at a current layer and a reliability of motion vector prediction using neighbouring motion vectors at a base layer may be used to determine the predictive motion vector.

The inventors of the present application propose several coding improvements to a multilayer video coding system as described herein.

### BRIEF DESCRIPTION OF THE DRAWINGS

FIG. 1 is a simplified block diagram of a multi-layer video decoder according to an embodiment of the present invention.

FIG. 2 illustrates pixelblock partitioning for base layer coding and enhancement layer coding according to an embodiment of the present invention.

FIG. 3 illustrates a method of predicting motion vectors for an enhancement layer video decoder according to an embodiment of the present invention.

FIG. 4 is a simplified block diagram of a multi-layer video decoder according to another embodiment of the present invention.

FIG. 5 is a flow diagram of a multi-layer video decoder.

### DETAILED DESCRIPTION

A first improvement is obtained for prediction of motion vectors to be used in prediction of video data for enhancement layer data. Arbitrary pixelblock partitioning between base layer data and enhancement layer data raises problems to identify base layer motion vectors to be used as prediction sources for enhancement layer motion vectors. The inventors propose to develop motion vectors by scaling a base layer pixelblock partitioning map according to a size difference between the base layer video image and the enhancement layer video image, then identifying from the scaled map scaled base layer pixelblocks that are co-located with the enhancement layer pixelblocks for which motion vector prediction is to be performed. Motion vectors from the scaled co-located base layer pixelblocks are averaged in a weighted manner according to a degree of overlap between the scaled base layer pixelblocks and the enhancement layer pixelblock. Another improvement is obtained by filtering recovered base layer image data before it is provided to an enhancement layer decoder. When a specified filter requires image data outside a prediction region available from a base layer decoder, the prediction region data may be supplemented with previously-decoded data from an enhancement layer at a border of the prediction region. Filtering may be performed on a composite image obtained by the merger of the prediction region image data and the border region image data.

### Motion Vector Prediction

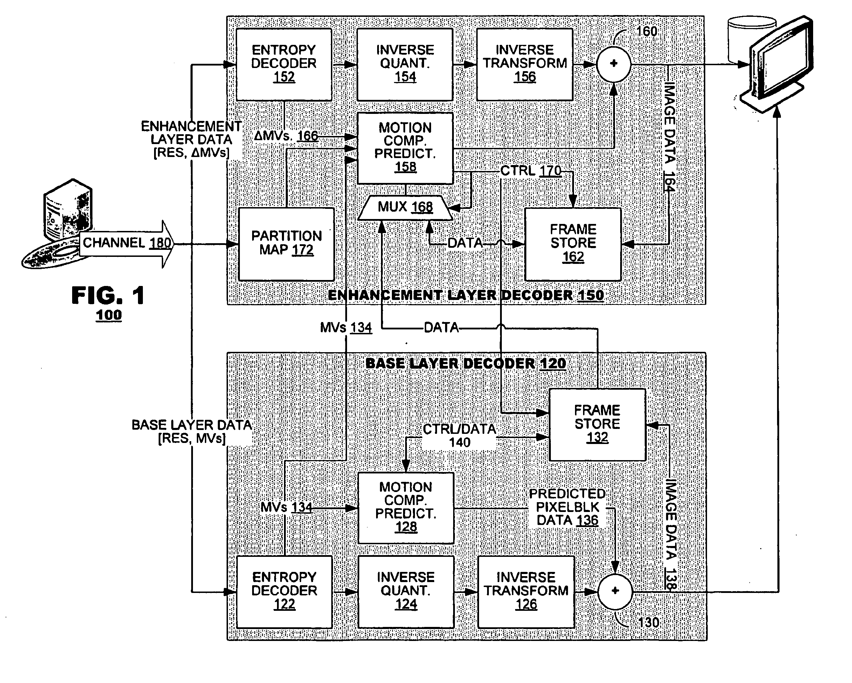

FIG. 1 is a simplified block diagram of a layered video decoder 100 according to an embodiment of the present invention. As illustrated, the video decoder 100 may include a base layer decoder 120 and an enhancement layer decoder 150, each of which receives coded video data received from a channel 180. A channel 180 provides physical transport for coded video data; typically, channels are storage media such as electrical, magnetic or optical memory devices or physical transport media such as wired communication links (optical or electrical cables). The channel data includes identifiers in the coded signal that distinguish coded data that are intended for decode by the base layer decoder 120 from coded data intended for decode by the enhancement layer decoder 150. In certain implementations, it may be advantageous to provide multiple enhancement layer decoders (only one is shown in FIG. 1) and, in such case, the channel data includes identifiers that permits a receiving decoder 100 to route data to appropriate enhancement layer decoders.

As illustrated in FIG. 1, a base layer decoder 120 may include an entropy decoder 122, an inverse quantizer 124, an inverse transform unit 126, a motion compensation prediction unit 128, an adder 130 and a frame store 132. Coded video data often represents video information as a serial data stream which has been entropy coded by, for example, run-length coding. The entropy decoder 122 may invert this coding process and build pixelblock arrays of coefficient data for further processing by the base layer decoder 120. The inverse quantizer 124 typically multiplies the coefficient data by a quantization parameter to invert a quantization process that had been performed by an encoder (not shown). The decoder 120 receives the quantizer parameter either expressly from channel data or by derivation from data provided in the channel; such processes are well known. The inverse transform 126 may transform pixelblock coefficients to pixel values according to a transform such as discrete cosine transformation, wavelet coding or other known transform. The pixel data generated by the inverse transform unit 126 are output to a first input of the adder 130.

Modern video coders often use predictive coding techniques to reduce bandwidth of coded signals. The frame store 132 may store pixel data of pixelblocks that have been previously decoded by the base layer decoder 120. The pixel data may belong to pixelblocks of a video frame currently being decoded. Additionally, pixel data belonging to pixelblocks of previously decoded frames (often called "reference frames") may be available to predict video data of newly received pixelblocks. In such cases, the channel data includes motion vectors 134 for newly received pixelblocks, which identify pixel data from the reference frames that are to be used as prediction sources for the new pixelblocks. For a given pixelblock, motion vectors 134 may be provided directly in the channel or may be derived from motion vectors of other pixelblocks in a video sequence.

A motion compensated predictor 128 may review motion vector data and may cause data to be read from the frame store 132 as sources of prediction for a corresponding pixelblock. Depending on a mode of prediction used, pixel data may be read from one or two reference frames. Pixel data read from a single reference frame often is presented directly to the adder (line 136). Pixel data read from a pair of reference frames may be processed (for example, averaged) before being presented to the adder 130. The adder 130 may generate recovered image data 138 on a pixelblock-by-pixelblock basis, which may be output from the base layer decoder 120 as output data. If a video frame is identified as a reference frame in a video sequence, the recovered image data 138 may be stored in the frame store 132 for use in subsequent decoding operations. Recovered image data 138 from the base layer decoder may be output to a display or stored for later use as desired.

As illustrated in FIG. 1, an enhancement layer decoder 150 also may include an entropy decoder 152, an inverse quantizer 154, an inverse transform unit 156, a motion prediction unit 158, an adder 160 and a frame store 162. The entropy decoder 152 may invert an entropy coding process used for coded enhancement layer data received from the channel and may build pixelblock arrays of coefficient data for further processing. The inverse quantizer 154 may multiply the coefficient data by a quantization parameter to invert a quantization process that had been performed on enhancement layer data by the encoder (not shown). The enhancement layer decoder 150 receives a quantizer parameter either expressly from enhancement layer channel data or by derivation from data provided in the channel; such processes are well known. The inverse transform 156 may transform pixelblock coefficients to pixel values according to a transform such as discrete cosine transformation, wavelet coding or other known transform. The pixel data generated by the inverse transform unit 156 are output to a first input of the adder 160.

The frame store 162 may store pixel data 164 of pixelblocks that have been previously decoded by the enhancement layer decoder 150. The pixel data 164 may belong to pixelblocks of a video frame currently being decoded. Additionally, pixel data belonging to pixelblocks of reference frames previously decoded by the enhancement layer decoder 150 to be available to predict video data of newly received pixelblocks. According to an embodiment of the present invention, motion vectors for the enhancement layer decoder 150 may be predicted from motion vectors used for the base layer decoder 120. The enhancement layer decoder receives motion vector residuals 166 (shown as "Δmv") which help to refine the motion vector prediction.

In an embodiment, the motion compensation predictor 158 receives motion vectors 134 from the base layer channel data and Δmvs 166 from the enhancement layer channel data. A partition mapping unit 168 may receive pixelblock definitions for both base layer and enhancement layer decode processes. Each of the decode layers may have had different pixelblock partitioning applied to the coded video. The motion compensation predictor 158 may predict motion vectors for enhancement layer pixelblocks as a derivation of the two pixelblock partitioning processes as discussed herein. The motion compensated predictor 158 may predict video data from base layer reference frames stored in frame store 132 and/or from enhancement layer reference frames stored in frame store 162 as dictated by decoding instructions provided in the channel 180 via a multiplexer 170 and control lines 172. Recovered image data from the enhancement layer decoder may be output to a display or stored for later use as desired.

FIG. 1 illustrates a functional block diagram of a video decoder 100. In practice it is common to provide video decoders as software programs to be run on a computer system or as circuit systems in hardware. The principles of the present invention are applicable to all such uses.

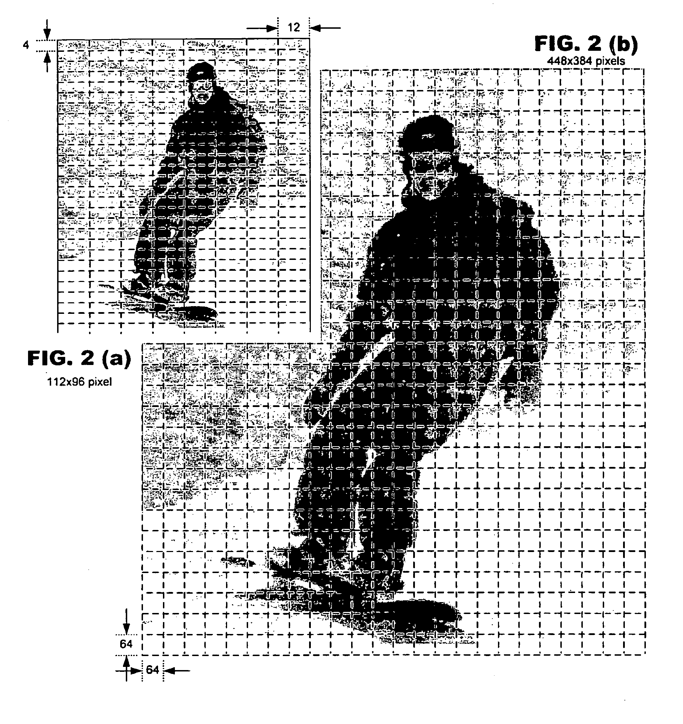

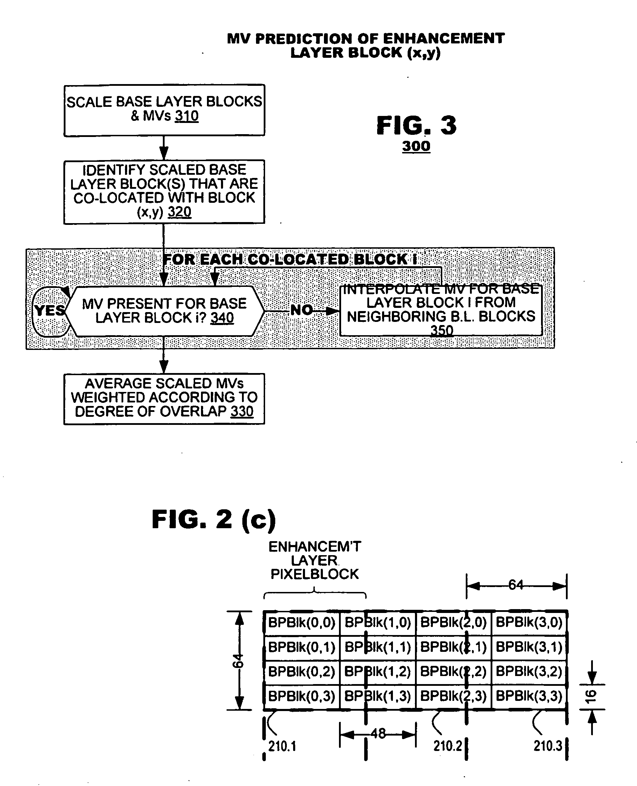

FIG. 2 illustrates two exemplary pixelblock partitioning schemes applied to a frame of video data. In one common application, coded base layer data represents video data at a certain display size but coded enhancement layer data represents the same video data in a larger size. FIG. 2 illustrates an example, in which coded base layer data represents a video frame at a 112x96 pixel size using pixel blocks that are 4x12 pixels (FIG. 2(a)). In the example, coded enhancement layer data represents the same video at a 448x384 pixel size, using pixelblocks that are 64x64 pixels (FIG. 2(b)). Thus, when the coded enhancement layer is decoded, the recovered video is four times the size of the video recovered when only the coded base layer data is decoded.

Coded video data from the channel 170 may include administrative data that defines the sizes of pixelblocks for both the base layer and the enhancement layer. Such data may be read by the partition mapping unit 168 for use by the motion compensation unit 158 of the enhancement layer (FIG. 1).

FIG. 3 illustrates a method 300 for predicting motion vectors for use in an enhancement layer decoding process according to an embodiment of the present invention. The method 300 may begin by scaling base layer pixelblocks and their motion vectors (step 310). To predict a motion vector of an enhancement layer pixelblock, the method 300 may identify scaled base layer pixelblocks that are co-located with the respective enhancement layer pixelblock (step 320). Multiple scaled base layer pixelblocks may be identified from this process. For each such scaled base layer pixelblock, the method 300 may average the scaled motion vectors corresponding to the scaled pixelblocks in a manner that is weighted according to a degree of overlap between the enhancement layer pixelblock and the scaled base layer pixelblock (step 330). In an embodiment, if a scaled base layer pixelblock does not have a motion vector associated therewith (step 340), a motion vector may be interpolated from motion vectors of neighboring base layer pixelblocks (step 350).

FIG. 2(c) illustrates operation of the method of FIG. 3 in context of the exemplary base layer and enhancement layer pixelblock partitions of FIG. 2. As noted, the recovered enhancement layer video is four times the size of the recovered base layer video. Base layer pixelblocks are 4 pixels by 12 pixels and enhancement layer pixelblocks are 64 pixels by 64 pixels. When scaled by difference in video sizes, the scaled base layer pixelblocks are 16 pixels by 48 pixels. FIG. 2(c) illustrates three 64x64 enhancement layer pixelblocks 210.1-210.3 (shown in dashed lines) and an array of twelve base layer pixelblocks BPBIk(0,0)-BPBIk(3,3) that have been scaled according to the size difference between the two layers (4x). As illustrated, boundaries between scaled base layer pixelblocks to not aligned to boundaries between enhancement layer pixelblocks. For example, scaled base layer pixelblocks BPBIk(0,0), BPBIk(0,1), BPBIk(0,2) and BPBIk(0,3) are contained entirely within the enhancement layer pixelblock 210.1 but each scaled base layer pixelblocks BPBIk(1,0), BPBIk(1,1), BPBIk(1,2) and BPBIk(1,3) overlap the enhancement layer pixelblock 210.1 by only a third of its area. When averaging the contribution of the motion vectors of these base layer pixelblocks, the scaled motion vectors from base layer pixel blocks BPBIk(1,0), BPBIk(1,1), BPBIk(1,2) and BPBIk(1,3) may be given less weight than those of base layer pixelblocks BPBIk(0,0), BPBIk(0,1), BPBIk(0,2) and BPBIk(0,3).

With respect to enhancement layer pixel block 210.2, no scaled base layer pixelblock falls entirely within its area. Base layer pixelblocks BPBIk(1,0), BPBIk(1,1), BPBIk(1,2), BPBIk(1,3), BPBIk(2,0), BPBIk(2,1), BPBIk(2,2) and BPBIk(2,3) each overlap enhancement layer pixelblock 210.2 by two-thirds. When averaging contribution of the motion vectors for each of the base layer pixelblocks, the motion vectors may be assigned weights corresponding to the degree of overlap. In this example, the weights of all co-located base layer pixelblocks are the same merely because the degree of overlap happens to be the same -- two-thirds.

As shown above, embodiments of the present invention provide a method of predicting enhancement layer motion vectors for a multi-layer video decoder in which a base layer video data and an enhancement layer video data are subject to arbitrary pixelblock partitioning before coding.

### Composite Image Generation and Filtering

According to another embodiment of the present invention, a multi-layer decoder may provide for composite image generation and filtering as decoded image data is exchanged between decoding layers. The inventors foresee application to coding environments in which enhancement layer decoding is to be performed in a specified area of a video frame, called a "prediction region" herein. Inter-layer filtering may be performed on recovered image data corresponding to the prediction region that is obtained from a base layer decoder. If a multipixel filtering operation is to be applied to the recovered base layer data, the filtering operation may not be fully effective at a border of the prediction region. To improve performance of the filtering operation, prediction region data may be supplemented with border data taken from a previously decoded frame available in a frame store of an enhancement layer decoder.

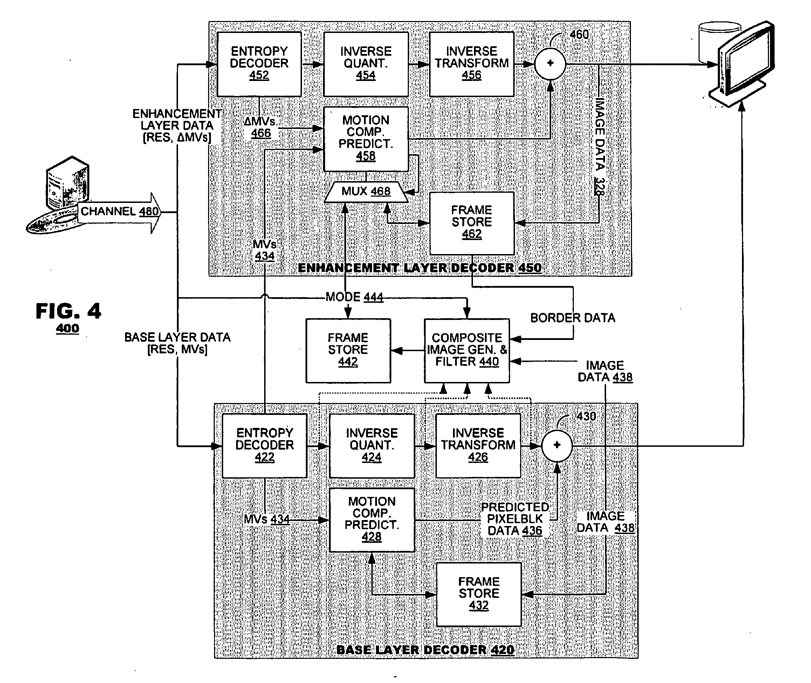

FIG. 4 is a simplified block diagram of a layer video decoder 400 according to an embodiment of the present invention. As illustrated, the video decoder 400 may include a base layer decoder 420 and an enhancement layer decoder 450, each of which receives coded video data received from a channel 480. A channel 480 provides physical transport for coded video data; typically, channels are storage media such as electrical, magnetic or optical memory devices or physical transport media such as wired communication links (optical or electrical cables). The channel data includes identifiers in the coded signal that distinguish coded data that are intended for decode by the base layer decoder 420 from coded data intended for decode by the enhancement layer decoder 450. In certain implementations, it may be advantageous to provide multiple enhancement layer decoders (only one is shown in FIG. 4) and, in such case, the channel data includes identifiers that permits a receiving decoder 400 to route data to appropriate enhancement layer decoders.

As illustrated in FIG. 4, a base layer decoder may include an entropy decoder 422, an inverse quantizer 424, an inverse transform unit 426, a motion prediction unit 428, an adder 430 and a frame store 432. Coded video data often represent video information as a serial data stream which has been compressed according to an entropy coding scheme such as run-length coding. The entropy decoder 422 may invert this coding process and build pixelblock arrays of coefficient data for further processing by the base layer decoder 420. The inverse quantizer 424 typically multiplies the coefficient data by a quantization parameter to invert a quantization process that had been performed by an encoder (not shown). The decoder receives the quantizer parameter either expressly from channel data or by derivation from data provided in the channel; such processes are well known. The inverse transform 426 transforms pixelblock coefficients to pixel values according to a transform such as discrete cosine transformation, wavelet coding or other known transform. The pixel data generated by the inverse transform unit 426 are output to a first input of the adder 430.

The frame store 432 may store pixel data of pixelblocks that have been previously decoded by the base layer decoder 420. The pixel data may belong to pixelblocks of a video frame currently being decoded. Additionally, pixel data belonging to pixelblocks reference frames may be available to predict video data of newly received pixelblocks. In such cases, the channel data includes motion vectors 434 for newly received pixelblocks, which identify pixel data to be used as prediction sources for newly received coded pixelblocks. For a given pixelblock, motion vectors 434 may be provided directly in the channel or may be derived from motion vectors of other pixelblocks in a video sequence.

A motion compensated predictor 428 may review motion vector data and may cause data to be read from the frame store 432 as sources of prediction for a corresponding pixelblock. Depending on a mode of prediction used, pixel data may be read from one or two reference frames. Pixel data read from a single reference frame often is presented directly to the adder (line 436). Pixel data read from a pair of reference frames may be processed (for example, averaged) before being presented to the adder. The adder 430 may generate recovered image data 438 on a block-by-block basis, which may be output from the base layer decoder as output data. If a video frame is identified as a reference frame in a video sequence, the recovered video data may be stored in the frame store 432 for use in subsequent decoding operations. Recovered image data from the base layer decoder 420 may be output to a display or stored for later use as desired.

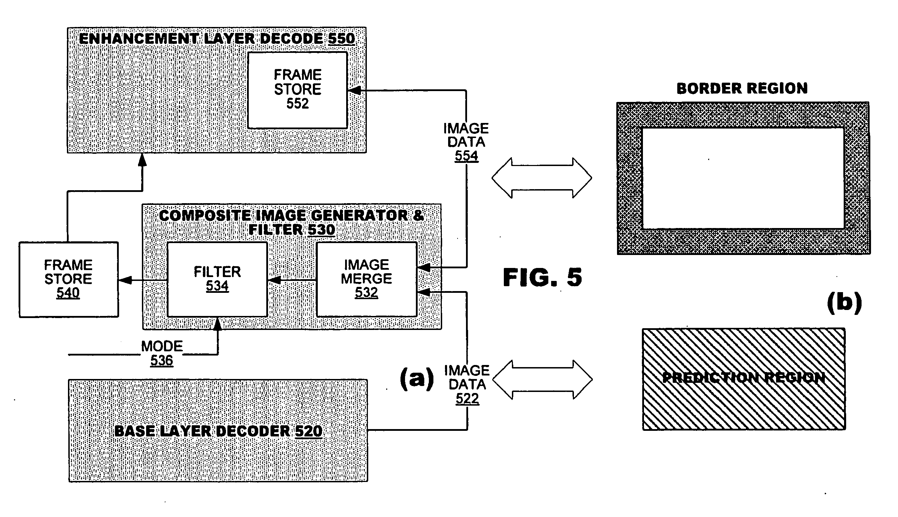

According to an embodiment, the video decoder 400 may include composite image generator and filtering ("CIG") unit 440 and a frame store 442. The CIG unit 440 may receive recovered base layer video data 438 in a prediction region. It also may receive decoded image data from an enhancement layer decoder 450. The CIG unit 440 may generate composite image data as a merger between prediction region data and recovered enhancement layer data that occurs at a spatial region bordering the prediction region, having been scaled as necessary to overcome image sizing differences between recovered base layer data and recovered enhancement layer data, shown in FIGS. 5 and 6. The prediction region data and border region data are from different frames of a video sequence.

As illustrated in FIG. 4, an enhancement layer decoder 450 also may include an entropy decoder 452, an inverse quantizer 454, an inverse transform unit 456, a motion prediction unit 458, an adder 460 and a frame store 462. The entropy decoder 452 may invert an entropy coding process used for enhancement layer data received from the channel and may build pixelblock arrays of coefficient data for further processing. The inverse quantizer 454 may multiply the coefficient data by a quantization parameter to invert a quantization process that had been performed on enhancement layer data by the encoder (not shown). The enhancement layer decoder 450 receives a quantizer parameter either expressly from enhancement layer channel data or by derivation from data provided in the channel; such processes are well known. The inverse transform 456 transforms pixelblock coefficients to pixel values according to a transform such as discrete cosine transformation, wavelet coding or other known transform. The pixel data generated by the inverse transform unit 456 are output to a first input of the adder 460.

The frame store 462 may store pixel data 464 of pixelblocks that have been previously decoded by the base layer decoder 450. The pixel data 464 may belong to pixelblocks of a video frame currently being decoded. Additionally, pixel data belonging to pixelblocks of reference frames previously decoded by the enhancement layer decoder 450 to be available to predict video data of newly received pixelblocks. According to an embodiment of the present invention, motion vectors for the enhancement layer decoder 450 may be predicted from motion vectors used for the base layer decoder 420. The enhancement layer decoder receives motion vector residuals 466 (shown as "Δmv") which help to refine the motion vector prediction.

In an embodiment, the motion compensation predictor 458 receives motion vectors 434 from the base layer channel data and Δmvs 466 from the enhancement layer channel data. The motion compensated predictor 458 may predict video data from prediction data in frame store 442 and/or from enhancement layer reference frames stored in frame store 462 as dictated by decoding instructions provided in the channel 480 via a multiplexer 468 and control lines. Optionally, motion vector prediction may occur according to the processes shown in FIGS. 1-3. Recovered image data from the enhancement layer decoder may be output to a display or stored for later use as desired.

FIG. 5 illustrates operation of the composite image generation and filtering process of the multi-layer decoder. FIG. 5 (a) shows operation of the base layer decoder 520 which generates recovered base layer image data 522 from channel data (not shown). The base layer image data 522 is confined to a prediction region, shown in FIG. 5 (b). The enhancement layer decoder 550 stores image data for previously-decoded frames (in frame store 552) from which border region data may be extracted (FIG. 5 (b)). In FIG. 5 (b), prediction region data is shown having been scaled to synchronize its image size with that of the border region.

The CIG unit 530 includes an image merge unit 532 that develops a composite image from the prediction region data and the image data available in the enhancement layer frame store 552. Specifically, having determined which filtering operation is to be performed, the image merge unit 532 may determine how much border region data must be obtained to perform the filtering operation fully on each pixel location within the prediction region. The image merge unit 532 may retrieve a corresponding amount of data from the frame store 532 and integrate it with the prediction region image data 522. Thereafter, filtering 534 may be applied to the composite image data in a traditional manner. The filtered image data may be stored in frame store 540 to be available to the enhancement layer decoder 550 in subsequent decoding operations.

The inter-layer composite image generation and filtering process may find application with a variety of well-known filtering operations, including for example deblocking filters, ringing filters, edge detection filters and the like. The type of filtering operation may be specified to the composite image generator and filtering unit 530 via an administrative signal 536 provided in the channel or derived therefrom (also shown as a mode signals 444 in FIG. 4).

In an embodiment, the merger and filtering operations may be performed on data obtained at stages of decoding that are earlier than the recovered data output by the respective decoders 420, 450. Thus, the CIG unit 440 shows inputs (in phantom) taken from the inverse transform unit 426, the inverse quantizer 424 and the entropy decoder 422 as alternatives to line 438. The CIG unit 440 may take similar data from the enhancement layer decoder (not shown in FIG. 4). In such cases, the CIG unit 440 may include filtering units (FIG. 5, 530) that are specific to the types of data taken from the respective decoders 420, 450.

Several embodiments of the present invention are specifically illustrated and described herein. However, it will be appreciated that modifications and variations of the present invention are covered by the above teachings and within the purview of the appended claims without departing from the intended scope of the invention.

## Claims

1. A method of predicting motion vectors in a multi-layer video decoding process, comprising:
determining a size difference between recovered video data obtained solely by a base layer decode process and recovered video data obtained from an enhancement layer decode process;
scaling a base layer pixelblock partition map according to the determined size difference;
predicting a motion vector of an enhancement layer pixelblock according to:
determining which base layer pixelblock(s), when scaled according to the size difference, are co-located with the enhancement layer pixelblock,
scaling motion vectors of the co-located base layer pixelblock(s) according to the size difference, and
averaging the scaled motion vectors of the co-located base layer pixelblock(s), wherein the averaging weight contribution of each scaled motion vector is based on a degree of overlap between the enhancement layer pixelblock and the respective scaled base layer pixelblock.

2. The method of claim 1, further comprising, when a co-located base layer pixelblock does not have a motion vector associated with it, interpolating a motion vector for the respective base layer pixelblock from motion vectors of neighboring base layer pixelblocks.

3. The method of claim 1, further comprising developing a partition map from enhancement layer pixelblock definitions and base layer pixelblocks received from a communication channel.

4. The method of claim 1, further comprising predicting data of the enhancement layer pixelblock from at least one of stored decoded base layer image data according to the predicted motion vector, and stored decoded enhancement layer image data according to the predicted motion vector.

5. A multi-layer video decoder, comprising:
a base layer decoder to generate recovered base layer image data from base layer coded video provided in a channel according to temporal prediction techniques, and
an enhancement layer decoder to generate recovered enhancement layer image data from enhancement layer coded video provided in a channel according to temporal prediction techniques, comprising:
a partition map that stores information representing pixelblock partitioning of the base layer image data and of the enhancement layer image data and
a motion compensation predictor that predicts recovered enhancement layer image data from previously decoded image data according to a motion vectors, a motion vector of at least one enhancement layer pixelblock being predicted according to:
determining which base layer pixelblock(s), when scaled according to a size difference between base layer pixelblocks and enhancement layer pixelblocks, are co-located with the enhancement layer pixelblock,
scaling motion vectors of the co-located base layer pixelblock(s) according to the size difference, and
averaging the scaled motion vectors of the co-located base layer pixelblock(s), wherein the averaging weight contribution of each scaled motion vector is based on a degree of overlap between the enhancement layer pixelblock and the respective scaled base layer pixelblock.

6. The decoder of claim 5, wherein, when a co-located base layer pixelblock does not have a motion vector associated with it, the motion compensation predictor interpolates a motion vector for the respective base layer pixelblock from motion vectors of neighboring base layer pixelblocks.

7. The decoder of claim 5, wherein the partition map derives the partitioning information from enhancement layer pixelblock definitions and base layer pixelblocks received from a communication channel.

8. The decoder of claim 5, wherein the previously decoded image data is at least one of stored decoded base layer image data, and stored decoded enhancement layer image data.

9. A video decoding method comprising:
decoding recovered prediction region data from base layer coded video provided in a channel according to temporal prediction techniques,
generating composite image data as a merger between the recovered prediction region data with border data taken from previously-decoded recovered enhancement layer data,
filtering the composite image data, and
generating new recovered enhancement layer image data from the filtered composite image data and from enhancement layer coded video provided in a channel according to temporal prediction techniques.

10. The method of claim 9, wherein an amount of data to be taken as a border region is determined from a type of filtering to be applied.

11. The method of claim 9, wherein the filtering is at least one of deblocking filtering, ringing filtering, and edge detection filtering.

12. A video decoder, comprising:
a base layer decoder to generate recovered base layer image data from base layer coded video provided in a channel according to temporal prediction techniques;
an enhancement layer decoder to generate recovered enhancement layer image data from enhancement layer coded video provided in a channel according to temporal prediction techniques, the enhancement layer decoding having storage for reference frames of recovered enhancement layer image data;
a composite image generator having inputs for recovered base layer image data and reference frames of recovered enhancement layer image data, the generator to merge prediction region data from the recovered base layer image data with a border region from the reference frames of recovered enhancement layer image data, the prediction region having been scaled to account for any size difference between the recovered base layer data and the recovered enhancement layer image data, wherein the border region is taken from a spatial area that borders a spatial area occupied by the prediction region;
a filter that applies image filtering to the merged data, wherein an output of the filter is input to the enhancement layer decoder as reference image data for temporal prediction.

13. The decoder of claim 12, wherein a width of the border region is determined from a type of image filtering to be applied.

14. The decoder of claim 12, wherein the image filtering is at least one of deblocking filtering, ringing filtering, and edge detection filtering.

## Patentansprüche

1. Verfahren zum Vorhersagen von Bewegungsvektoren in einem Mehrschicht-Videodekodierprozess, aufweisend:
Bestimmen eines Größenunterschieds zwischen wiederhergestellten Videodaten, welche allein durch einen Basisschichtdekodierprozess erhalten wurden und wiederhergestellten Videodaten, welche aus einem Verbesserungsschichtdekodierprozess erhalten wurden;
Skalieren einer Basisschichtpixelblock-Partition-Map gemäß dem bestimmten Größenunterschied;
Vorhersagen eines Bewegungsvektors eines Verbesserungsschichtpixelblocks gemäß:
Bestimmen, welche/r Basisschichtpixelblock/-blöcke, wenn gemäß dem Größenunterschied skaliert, gemeinsam mit dem Verbesserungsschichtpixelblock untergebracht sind,
Skalieren der Bewegungsvektoren des/r gemeinsam untergebrachten Basisschichtpixelblocks/-blöcke gemäß dem Größenunterschied und
Mitteln der skalierten Bewegungsvektoren des/r gemeinsam untergebrachten Pixelblocks/-blöcke, wobei der durchschnittliche Gewichtungsbeitrag jedes skalierten Bewegungsvektors auf einem Grad von Überlappung zwischen dem Verbesserungsschichtpixelblock und dem jeweiligen skalierten Basisschichtpixelblock basiert.

2. Verfahren gemäß Anspruch 1, weiterhin aufweisend, wenn ein gemeinsam untergebrachter Basisschichtpixelblock keinen Bewegungsvektor aufweist, welcher mit diesem assoziiert ist, Interpolieren eines Bewegungsvektors für den jeweiligen Basisschichtpixelblock aus Bewegungsvektoren der benachbarten Basisschichtpixelblöcke.

3. Verfahren gemäß Anspruch 1, weiterhin aufweisend entwickeln einer Partition-Map aus Verbesserungsschichtpixelblockdefinitionen und Basisschichtpixelblöcken, welche von einem Kommunikationskanal empfangen werden.

4. Verfahren gemäß Anspruch 1, weiterhin aufweisend Vorhersagen von Daten des Verbesserungsschichtpixelblocks aus mindestens einem der gespeicherten dekodierten Basisschichtbilddaten gemäß dem vorhergesagten Bewegungsvektor und gespeicherten dekodierten Verbesserungsschichtbilddaten gemäß dem vorhergesagten Bewegungsvektor.

5. Mehrschichtvideodekodierer, aufweisend:
Einen Basisschichtdekodierer zum Erzeugen von wiederhergestellten Basisschichtbilddaten aus basisschichtkodiertem Video, welches in einem Kanal bereitgestellt wird, gemäß temporären Vorhersagetechniken, und
einen Verbesserungsschichtdekodierer zum Erzeugen wiederhergestellter Verbesserungsschichtbilddaten aus verbesserungsschichtkodiertem Video, welches in einem Kanal bereitgestellt wird, gemäß den temporären Vorhersagetechniken, aufweisend:
Eine Partition-Map, welche Informationen speichert, welche Pixelblockpartitionierung der Basisschichtbilddaten und der Verbesserungsschichtbilddaten repräsentieren und
einen Bewegungskompensationsprädiktor, welcher wiederhergestellte Verbesserungsschichtbilddaten aus vorher dekodierten Bilddaten gemäß einem Bewegungsvektor, einem Bewegungsvektor der mindestens einen Verbesserungsschichtpixelblock vorhersagt, welcher vorhergesagt wird gemäß:
Bestimmen, welche/r Basisschichtpixelblock/-blöcke, wenn gemäß dem Größenunterschied skaliert, gemeinsam mit dem Verbesserungsschichtpixelblock untergebracht sind,
Skalieren der Bewegungsvektoren des/r gemeinsam untergebrachten Basisschichtpixelblocks/-blöcke gemäß dem Größenunterschied und
Mitteln der skalierten Bewegungsvektoren des/r gemeinsam untergebrachten Pixelblocks/-blöcke, wobei der durchschnittliche Gewichtungsbeitrag jedes skalierten Bewegungsvektors auf einem Grad von Überlappung zwischen dem Verbesserungsschichtpixelblock und dem jeweiligen skalierten Basisschichtpixelblock basiert.

6. Dekodierer gemäß Anspruch 5, wenn ein gemeinsam untergebrachter Basisschichtpixelblock keinen Bewegungsvektor aufweist, welcher mit diesem assoziiert ist, interpoliert der Bewegungskompensationsprädiktor einen Bewegungsvektor für den jeweiligen Basisschichtpixelblock aus Bewegungsvektoren der benachbarten Basisschichtpixelblöcke.

7. Dekodierer gemäß Anspruch 5, wobei die Partition-Map die Partitionierungsinformationen aus Verbesserungsschichtpixelblockdefinitionen und Basisschichtpixelblöcken, welche von einem Kommunikationskanal empfangen werden, ableitet.

8. Dekodierer gemäß Anspruch 5, wobei die vorher dekodierten Bilddaten mindestens eines von gespeicherten dekodierten Basisschichtbilddaten und gespeicherten dekodierten Verbesserungsschichtbilddaten sind.

9. Videodekodierverfahren aufweisend:
Dekodieren wiederhergestellter Vorhersageregionsdaten aus basisschichtkodiertem Video, welches in einem Kanal bereitgestellt wird, gemäß temporären Vorhersagetechniken,
Erzeugen zusammengesetzter Bilddaten als eine Verschmelzung zwischen den wiederhergestellten Vorhersageregionsdaten mit Grenzdaten, welche aus vorherdekodierten wiederhergestellten Verbesserungsschichtdaten genommen werden,
Filtern der zusammengesetzten Bilddaten, und
Erzeugen neuer wiederhergestellter Verbesserungsschichtbilddaten aus den gefilterten zusammengesetzten Bilddaten und aus verbesserungsschichtkodiertem Video, welches in einem Kanal bereitgestellt wird, gemäß den temporären Vorhersagetechniken.

10. Verfahren gemäß Anspruch 9, wobei ein Betrag der Daten, welche als eine Grenzregion zu nehmen sind, aus einem Typ von Filterung bestimmt wird, welche anzuwenden ist.

11. Verfahren gemäß Anspruch 9, wobei die Filterung mindestens eine von Deblocking-Filterung, Überschwing-Filterung und Flankenerkennungsfilterung ist.

12. Videodekodierer, aufweisend:
einen Basisschichtdekodierer zum Erzeugen wiederhergestellter Basisschichtbilddaten aus basisschichtkodiertem Video, welches in einem Kanal bereitgestellt wird, gemäß den temporären Vorhersagetechniken;
einen Verbesserungsschichtdekodierer zum Erzeugen wiederhergestellter Verbesserungsschichtbilddaten aus verbesserungsschichtkodiertem Video, welches in einem Kanal bereitgestellt wird, gemäß den temporären Vorhersagetechniken, wobei die Verbesserungsschichtdekodierung Speicher für Referenzrahmen der wiederhergestellten Verbesserungsschichtbilddaten aufweist;
einen Generator eines zusammengesetzten Bild, welcher Eingabe für wiederhergestellte Basisschichtbilddaten und Referenzrahmen der wiederhergestellten Verbesserungsschichtbilddaten aufweist, wobei der Generator eingerichtet zum Verschmelzen von Vorhersageregionsdaten aus den wiederhergestellten Basisschichtbilddaten mit einer Grenzregion aus den Referenzrahmen der wiederhergestellten Verbesserungsschichtbilddaten, wobei die Vorhersageregion skaliert worden ist, um jedem Größenunterschied zwischen den wiederhergestellten Basisschichtdaten und den wiederhergestellten Verbesserungsschichtbilddaten Rechnung zu tragen, wobei die Grenzregion aus einem räumlichen Bereich genommen wird, welcher an einen räumlichen Bereich angrenzt, welcher durch die Vorhersageregion besetzt ist;
einen Filter, welcher Bildfilterung auf die verschmelzten Daten anwendet, wobei eine Ausgabe des Filters in den Verbesserungsschichtdekodierer eingegeben wird, als Referenzbilddaten für temporäre Vorhersage.

13. Verfahren gemäß Anspruch 12, wobei eine Breite der Grenzregion aus einem Typ von Bildfilterung, welche anzuwenden ist, bestimmt wird.

14. Verfahren gemäß Anspruch 12, wobei die Bildfilterung mindestens eine von Deblocking-Filterung, Überschwing-Filterung und Flankenerkennungsfilterung ist.

## Revendications

1. Un procédé de prédiction de vecteurs de déplacement dans un processus de décodage video à couches multiples, comprenant :
la détermination d'une différence de taille entre des données video récupérées obtenues uniquement au moyen d'un processus de décodage de couche de base et des données video récupérées obtenues au moyen d'un processus de décodage de couche de renforcement ;
la mise à l'échelle d'une carte de partition de blocs de pixels de couche de base en fonction de la différence de taille déterminée ;
la prédiction d'un vecteur de déplacement d'un bloc de pixels de couche de renforcement en fonction de :
la détermination de celui ou ceux des blocs de pixels de couche de base qui, lorsqu'ils sont mis à l'échelle en fonction de la différence de dimension,
sont colocalisés dans le bloc de pixels de couche de renforcement,
la mise à l'échelle des vecteurs de déplacement du ou des blocs de pixels de couche de base colocalisés en fonction de la différence de taille, et
le moyennage des vecteurs de déplacement, mis à l'échelle, du ou des blocs de pixels de couche de base colocalisés, la contribution de pondération du moyennage de chaque vecteur de déplacement mis à l'échelle étant basée sur un degré de chevauchement entre le bloc de pixels de couche de renforcement et le bloc de pixels de couche de base mis à l'échelle respectif.

2. Le procédé de la revendication 1, comprenant en outre, lorsqu'un bloc de pixels de couche de base colocalisé ne possède pas de vecteur de déplacement qui lui est associé, l'interpolation d'un vecteur de déplacement pour le bloc de pixels de couche de base respectif à partir de vecteurs de déplacement de blocs de pixels de couche de base voisins.

3. Le procédé de la revendication 1, comprenant en outre le développement d'une carte de partition à partir de définitions de bloc de pixels de couche de renforcement et de blocs de pixels de couche de base reçus sur un canal de communication.

4. Le procédé de la revendication 1, comprenant en outre la prédiction de données du bloc de pixels de couche de renforcement à partir d'au moins l'une d'entre des données d'image de couche de base décodées mémorisées en fonction du vecteur de déplacement prédit, et des données d'image de couche de renforcement décodées mémorisées en fonction du vecteur de déplacement prédit.

5. Un décodeur video à couches multiples, comprenant :
un décodeur de couche de base pour générer des données d'image de couche de base récupérées à partir d'une video codée de couche de base délivrée sur un canal au moyen de techniques de prédiction temporelle, et
un décodeur de couche de renforcement pour générer des données d'image de couche de renforcement récupérées à partir d'une video codée de couche de renforcement délivrée sur un canal au moyen de techniques de prédiction temporelle, comprenant :
une carte de partition qui mémorise des informations représentant un partitionnement de blocs de pixels des données d'image de couche de base et des données d'image de couche de renforcement, et
un prédicteur de compensation de déplacement qui prédit des données d'image de couche de renforcement récupérées à partir de données d'image précédemment décodées en fonction d'un vecteur de déplacement, un vecteur de déplacement d'au moins un bloc de pixels de couche de renforcement étant prédit par :
la détermination de celui ou ceux des blocs de pixels de couche de base qui, lorsqu'ils sont mis à l'échelle en fonction de la différence de dimension,
sont colocalisés dans le bloc de pixels de couche de renforcement,
la mise à l'échelle des vecteurs de déplacement du ou des blocs de pixels de couche de base colocalisés en fonction de la différence de taille, et
le moyennage des vecteurs de déplacement, mis à l'échelle, du ou des blocs de pixels de couche de base colocalisés, la contribution de pondération du moyennage de chaque vecteur de déplacement mis à l'échelle étant basée sur un degré de chevauchement entre le bloc de pixels de couche de renforcement et
le bloc de pixels de couche de base mis à l'échelle respectif.

6. Le décodeur de la revendication 5, dans lequel, lorsqu'un bloc de pixels de couche de base colocalisé ne possède pas de vecteur de déplacement qui lui est associé, le prédicteur de compensation de déplacement interpole un vecteur de déplacement pour le bloc de pixels de couche de base respectif à partir de vecteurs de déplacement de blocs de pixels de couche de base voisins.

7. Le décodeur de la revendication 5, dans lequel la carte de partition dérive les informations de partitionnement à partir de définitions de blocs de pixels de couche de renforcement et de blocs de pixels de couche de base reçus sur un canal de communication.

8. Le décodeur de la revendication 5, dans lequel les données d'image précédemment décodées sont au moins l'une d'entre des données d'image de couche de base décodées mémorisées, et des données d'image de couche de renforcement décodées mémorisées.

9. Un procédé de décodage video, comprenant :
le décodage de données de région de prédiction récupérées à partir d'une video codée de couche de base délivrée sur un canal au moyen de techniques de prédiction temporelle,
la génération de données d'image composite par fusion entre les données de région de prédiction récupérées et
des données de frontière prises sur des données de couche de renforcement récupérées précédemment décodées,
le filtrage des données d'image composite, et
la génération de nouvelles données d'image de couche de renforcement récupérées à partir des données d'image composite filtrées et à partir d'une video codée de couche de renforcement délivrée sur un canal au moyen de techniques de prédiction temporelle.

10. Le procédé de la revendication 9, dans lequel une quantité de données devant être prise comme région de frontière est déterminée à partir d'un type de filtrage devant être appliqué.

11. Le procédé de la revendication 9, dans lequel le filtrage est au moins l'un d'un filtrage de déblocage, un filtrage de dépassement, et un filtrage de détection de bord.

12. Un décodeur video, comprenant :
un décodage de couche de base pour générer des données d'image de couche de base récupérées à partir d'une video codée de couche de base délivrée sur un canal au moyen de techniques de prédiction temporelle ;
un décodeur de couche de renforcement pour générer des données d'image de couche de renforcement récupérées à partir d'une video codée de couche de renforcement délivrée sur un canal au moyen de techniques de prédiction temporelle, le décodage de couche de renforcement comprenant un stockage pour des trames de référence de données d'image de couche de renforcement récupérées ;
un générateur d'image composite possédant des entrées pour des données d'image de couche de base récupérées et des trames de référence de données d'image de couche de renforcement récupérées, le générateur servant à fusionner des données de région de prédiction provenant des données d'image de couche de base récupérées avec une région de frontière provenant des trames de référence de données d'image de couche de renforcement récupérées, la région de prédiction ayant été mise à l'échelle pour prendre en compte toute différence de taille entre les données de couche de base récupérées et les données d'image de couche de renforcement récupérées, la région de frontière étant prise sur une zone spatiale qui forme la frontière d'une zone spatiale occupée par la région de prédiction ;
un filtre qui applique un filtrage d'image aux données fusionnées, une sortie du filtre étant une entrée du décodeur de couche de renforcement en tant que données d'image de référence pour une prédiction temporelle.

13. Le décodeur de la revendication 12, dans lequel une largeur de la région de frontière est déterminée à partir d'un type de filtrage d'image devant être appliqué.

14. Le décodeur de la revendication 12, dans lequel le filtrage d'image est au moins l'un d'un filtrage de déblocage, d'un filtrage de dépassement et d'un filtrage de détection de bord.
